# EUROPEAN PATENT APPLICATION

(11) **EP 1 744 085 A1**
(43) Date of publication of application: **17.01.2007**
(21) Application number: 06253623.0
(22) Date of filing: 11.07.2006
(51) Int. Cl.: F16K 5/02, F23N 1/00

(54) **Valve stem**

(30) Priority: 11.07.2005 US 178775
(71) Applicant: Lincoln Brass Works, Inc., Waynesboro, TN 38485 (US)
(72) Inventor: Dehaan, James Alan, Zeeland, Michigan 49464 (US)
(74) Representative: Pawlyn, Anthony Neil

(57) **Abstract**

A mini gas valve assembly having a valve stem (28) with a flattened region (40) extending a length thereof. The valve stem is operable to withstand an applied torque pressure of at least 50 in-lbs or greater without exhibiting plastic deformation. In various embodiments, the valve stem comprises hollow, cold rolled steel having a wall thickness less than about 0.045 inches.

## Description

### FIELD OF THE INVENTION

The present invention relates to valve assemblies, and more particularly, to a valve assembly for use with gaseous fluids.

### BACKGROUND AND SUMMARY OF THE INVENTION

It is generally well known in the art to have a gas valve assembly that includes a combination of a valve body, a valve member, and a rotatable valve stem to control the flow of a fuel, or other gas, from an inlet source to an outlet. Contemporary mini gas valve assemblies are increasing in popularity and are being used with various appliances, such as gas ranges, outdoor barbeques, camp stoves, etc. The valve stems are typically made of brass or steel and currently have a 0.25 inch outside diameter valve stem.

One difference, however, is that these smaller diameter valve stems do not provide as much torsional strength as the older valve assemblies having larger diameter valve stems. In certain instances, mini gas valve assemblies exhibit valve stem deformation with as little as 25 to 35 in-lbs of torque, with permanent plastic deformation beginning with about 40 in-lbs. The present invention provides a cost effective mini gas valve assembly having increased valve stem torque strength.

In one aspect, the present invention provides a mini gas valve assembly having a main valve body including a first port, a second port, and a fluid passage providing fluid communication between the first and second ports. A valve member is disposed within a cavity in the main valve body and is configured to selectively adjust fluid flow between the first and second ports. A thin-walled, hollow valve stem is provided that is secured to the main valve body adjacent the valve member and configured for coordinated rotational movement with the valve member. The valve stem has a flattened portion extending a length proximal to the main valve body to an opposite distal end of the valve stem. Preferably, the valve stem is operable to withstand at least 50 in-lbs of torque without exhibiting plastic deformation. In one aspect, the present invention provides a valve stem that is heat treated having a Rockwell C hardness of from about 40 to about 55. Preferably, the valve stem is provided having a wall thickness of between about 0.03 to about 0.045 inches.

In certain embodiments, the gas valve assembly is further provided with an adjustment plug member rotatably disposed in the main valve body and accessible through the hollow valve stem for adjusting low flow rates through one of the first and second ports.

Further areas of applicability of the present invention will become apparent from the detailed description provided hereinafter. It should be understood that the detailed description and specific examples, while indicating the preferred embodiment of the invention, are intended for purposes of illustration only and are not intended to limit the scope of the invention.

### BRIEF DESCRIPTION OF THE DRAWINGS

The present invention will become more fully understood from the detailed description and the accompanying drawings, wherein:

FIG. 1 is a perspective view of a fully assembled mini gas valve assembly according to the principles of the present invention;

FIG. 2 is a side plan view of the mini gas valve assembly shown in FIG. 1;

FIG. 3 is a cross-sectional view of the valve assembly taken along the line 3-3 of FIG. 2;

FIG. 4 is a cross-sectional view of the valve assembly taken along the line 4-4 of FIG. 2;

FIG. 5 is an alternate perspective view of a mini gas valve assembly according to one aspect of the present invention;

FIG. 6 is a front plan view of the mini gas valve assembly shown in FIG. 5;

FIG. 7 is a cross-sectional view of the mini gas valve assembly taken along the line 7-7 of FIG. 5;

FIG. 8 is a top plan view of the mini gas valve assembly shown in FIG. 5;

FIG. 9 is a perspective view of a valve stem according to one aspect of the present invention;

FIG. 10 is a side plan view of the valve stem shown in FIG. 9;

FIG. 11 is a modified top view of the valve stem shown in FIG. 9 according to an alternate embodiment of the present invention;

FIG. 12 is a front plan view of the valve stem shown in FIG. 9;

FIG. 13 is an enlarged view of FIG. 12; and

FIG. 14 is a cross sectional view of the valve stem taken along the line 14-14 of FIG. 12.

### DETAILED DESCRIPTION OF THE PREFERRED EMBODIMENTS

The following description of the preferred embodiment(s) is merely exemplary in nature and is in no way intended to limit the invention, its application, or uses.

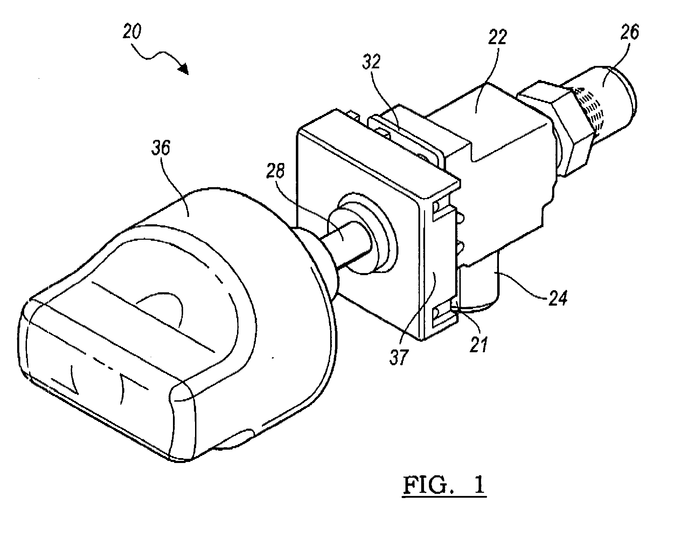

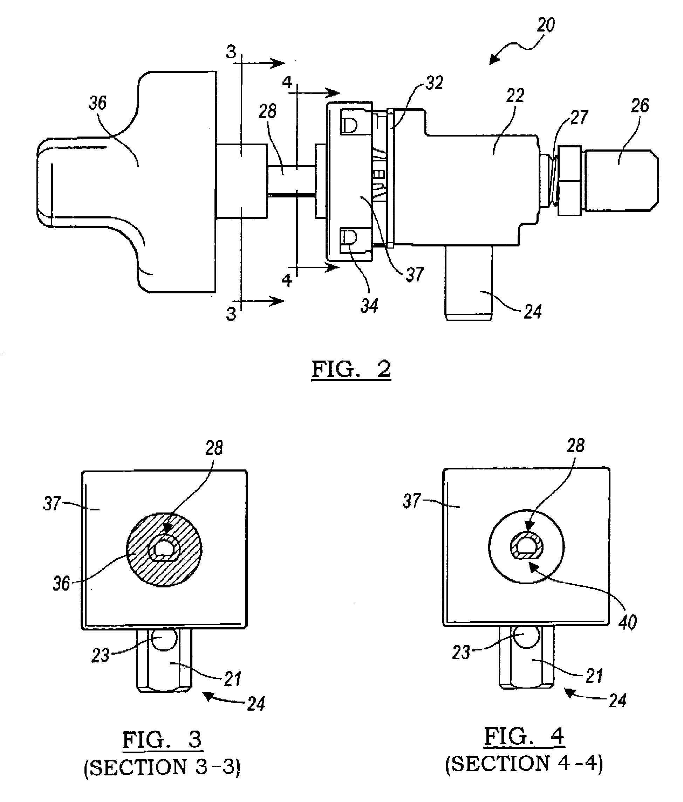

Typical gas supply systems include a plurality of gas valves, manifolds, air/fuel mixing tubes, and burner units. Referring to Figures 1 and 2, a mini gas valve assembly is shown in accordance with the present invention and is designated by the reference number 20. The gas valve assembly 20 includes a main valve body 22 having a first port 24, or inlet, a second port 26, or outlet, and a fluid passage enabling fluid communication between the first and second ports 24, 26. A valve stem 28 is provided for a user to selectively rotate a valve member 31 that controls the gradient fluid flow between fully on and off positions.

In preferred embodiments, the first and second ports 24, 26 are integral extensions of the main valve body 22. The main valve body 22 is preferably made of a metal material, such as aluminum, by appropriate casting or forging methods. Various ports, passages, and bores can be formed in the main valve body 22 using drilling operations known to one skilled in the art. The ports can be shaped having flattened regions 21 and provided with apertures 23 as desired. As illustrated, certain ports and other areas can be provided with one or more threaded portions 27 for connection to various manifolds, gas tubing, and other connecting devices. Recessed areas 25 may also be provided to house gaskets or other sealing members (not shown).

A fully assembled mini gas valve assembly 20 will preferably include a detachable control knob 36 to rotate the valve stem 28. In certain embodiments, a detachable ignition switch 37 is provided to enable electronic ignition of a burner unit when the valve stem is rotated to a specific location. In certain embodiments, the ignition switch 37 removably attaches to the main valve body 22.

The main valve body 22 provides a bore 30, or cavity, for receiving a valve member 31 or other valve components. The valve components can include any of several valve components as known in the art operable to selectively control fluid flow between the first and second ports 24, 26. It is appreciated by one skilled in the art, however, that the use of an annular tapered groove component may provide numerous advantages as compared to other valve designs. In particular, there is added flexibility in providing a desired control as well as simple manufacture. Additionally, if the valve member 31 wears over time, it will continue to provide an adequate seal between various ports disposed in the bore 30.

Thus, in one embodiment, the bore 30 is configured to retain an annular plug type valve member 31 that provides selective fluid communication between the first and second ports 24, 26. The plug valve member has a body portion that is generally cylindrical or conical in shape such that the exterior of the body portion matches the interior of the bore 30 and valve body 22. Typically, the valve member 31 includes at least one radially extending aperture (not shown) capable of being positioned in selective alignment with a first port area 29, providing fluid communication to the second port 26.

The valve stem 28 is disposed adjacent to the valve member 31 for rotating the valve member 31 within the bore 30 of the main valve body 22 and is described in more detail below. It should be appreciated that the main valve body 22 can be configured differently to accommodate various types of inlet 24 and outlet 26 configurations as well as mounting arrangements. For example, while the figures depict the inlet 24 and outlet 26 ports substantially perpendicular to one another, it is contemplated that their spatial relationship can include a wide array of alternate variations.

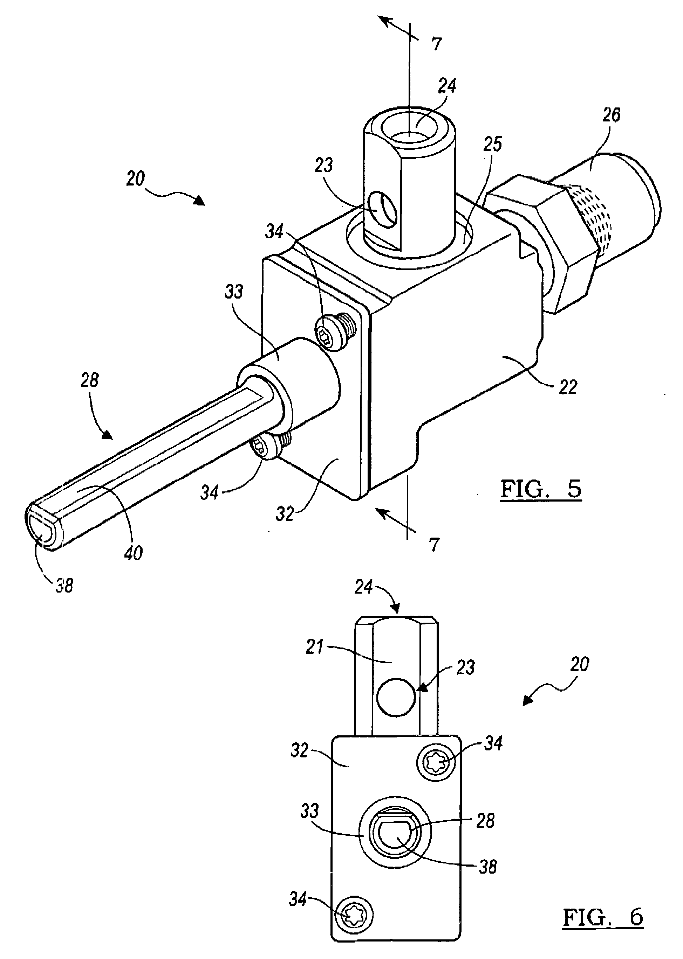

As shown in Figures 5-8, the valve stem 28 is secured in place with a retaining cover plate 32 that clamps to the main valve body 22 with mechanical fasteners 34, such as screws. Preferably, the retaining cover plate 32 includes an upstanding shoulder portion 33 for added support and to minimize radial movement of the valve stem 28. The valve stem 28 is hollow and defines an opening 38 extending the entire length of the stem. Preferably, the valve stem 28 has a flattened section 40 operable to provide increased torque strength while providing an anti-rotation feature to minimize any misalignment between the valve stem 28 and a control knob 36 or ignition switch 37.

In preferred embodiments, a spring mechanism (not shown) is provided in the main valve body 22 to coordinate with the valve stem 28 such that the valve stem 28 must be depressed prior to rotating the valve member 31 out from the off position. A suitable spring seat or stop means, such as a locking clip, may be provided so as to not over compress the spring.

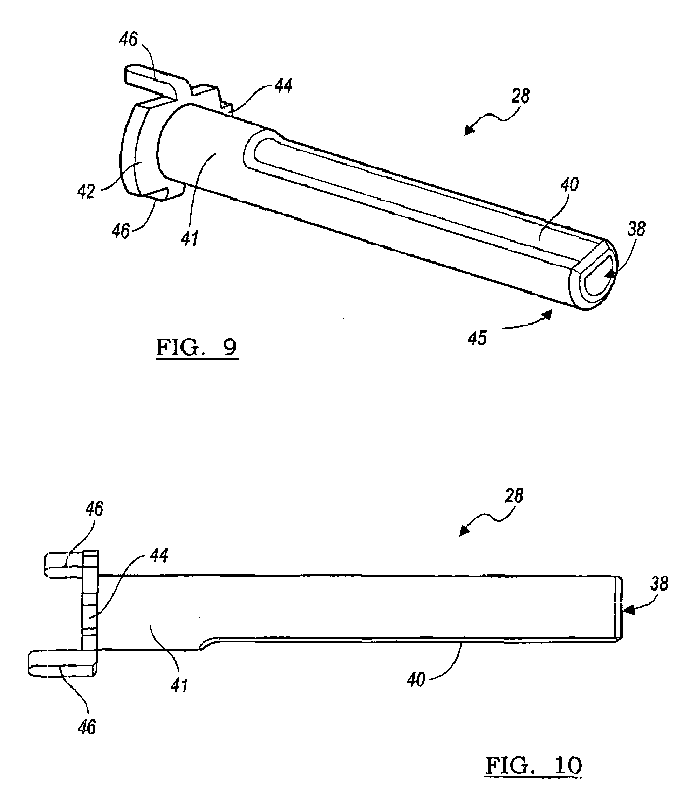

With reference to Figures 9-14, the valve stem 28 of the present invention will now be described in greater detail.

In various preferred embodiments, the valve stem 28 is provided with a base section 42 having at least one tab locking mechanism, such as a locking tab member 44. It should be appreciated that the retaining cover plate 32 can be configured with numerous stops, notches, tangs, or protrusions that may limit rotation of the valve member 31, thereby allowing the valve stem 28 to be locked at different positions, such as low, medium, and high. This particular embodiment allows for multiple operating conditions by simple rotation of a valve stem 28. In this instance, the valve stem would have to be slightly depressed in order to move the valve stem from the various locked positions. For example, once the locking tab 44 is out of a safety notch, the valve stem 28 can be freely rotated from the lowest setting to a fully open position. In preferred embodiments, the base section 42 of the valve stem further includes a pair of projecting tabs 46 diametrically opposed from one another that are configured to mate with respective notches (not shown) on the valve member 31 providing coordinated movement therewith.

In preferred embodiments, the valve stem 28 is zinc coated cold rolled steel. In certain embodiments, the valve stem comprises stainless steel. Depending on the material selection, it may be desirable to heat treat the valve stem 28 for additional strength. Preferably, the valve stem is heat treated to a hardness of from about 40 to about 55 using the Rockwell C hardness scale. In certain embodiments, the hardness is greater than 55. It should be appreciated to one skilled in the art that many different methods exist for measuring the equivalent hardness of a material, all of which are included within the scope of the present invention. Regardless of heat treatment, the valve stem 28 of the present invention is operable to withstand at least about 50 in-lbs of torque without exhibiting permanent plastic deformation. Preferably the valve stem 28 withstands between about 50 to about 60 in-lbs of torque, and more preferably between about 50 to about 70 in-lbs or torque without exhibiting plastic deformation. Most preferably, the valve stem 28 is operable to withstand a torque level greater than 70 in-lbs of torque. It should understood however, that other components that interact with the valve stem, such as notches, tabs, or stops provided in the retaining cover plate 32, should also be designed and suitably configured to withstand an equivalent amount of torque without exhibiting failure or severe deformation.

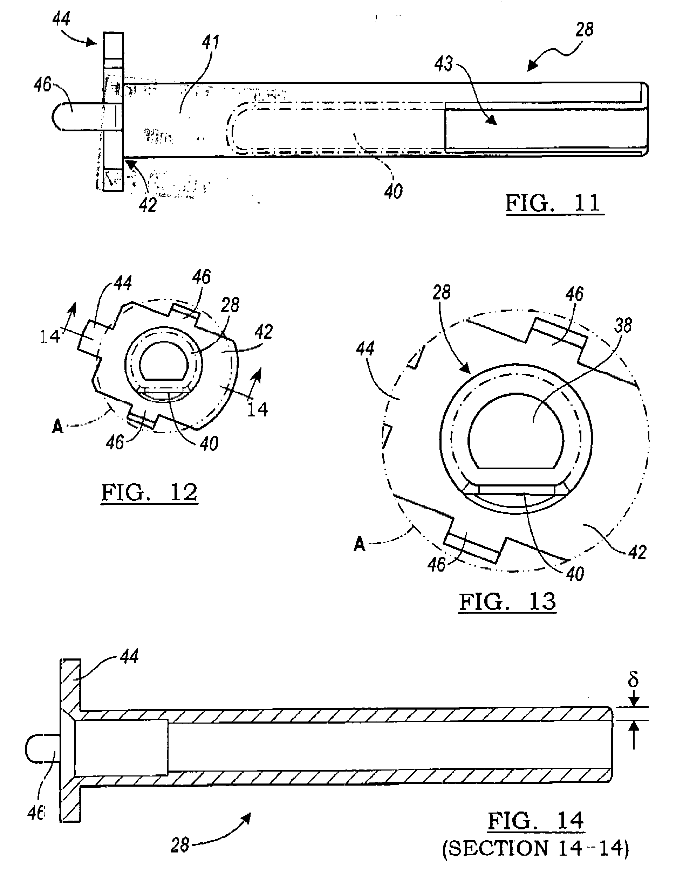

As in Figure 14, the valve stem of the present invention has a wall thickness, δ, of less than about 0.045 inches, and preferably from about 0.03 to about 0.045 inches. In certain embodiments, the valve stem can be provided with a wall thickness of less than about 0.03 inches as long as the stem provides the proper strength. Typical mini gas valve assemblies are provided with a valve stem having an outside diameter of about 0.25 inches or less. An overall length of the valve stem can vary depending upon the end use, and the lengths can be custom sized as desired.

In various embodiments, the valve stem has a substantially circular cross-section in an area 41 near the base member 42 to match and correspond with the shoulder region 33 of the retaining cover plate 32. Thus, once assembled, the exposed portion of the valve stem 28 has a flattened portion 40 extending a length L proximal to the main valve body 22 to an opposite distal end 45 of the valve stem. As shown in Figure 11, in certain embodiments the valve stem includes a flattened portion 40 that partially extends a length of the valve stem 28 and is adjacent to a cut-out section 43. The cut-out section 43 can be a variety of different lengths. In various embodiments, the cut-out section 43 provides an alternate mating surface for a control knob 36, or the like.

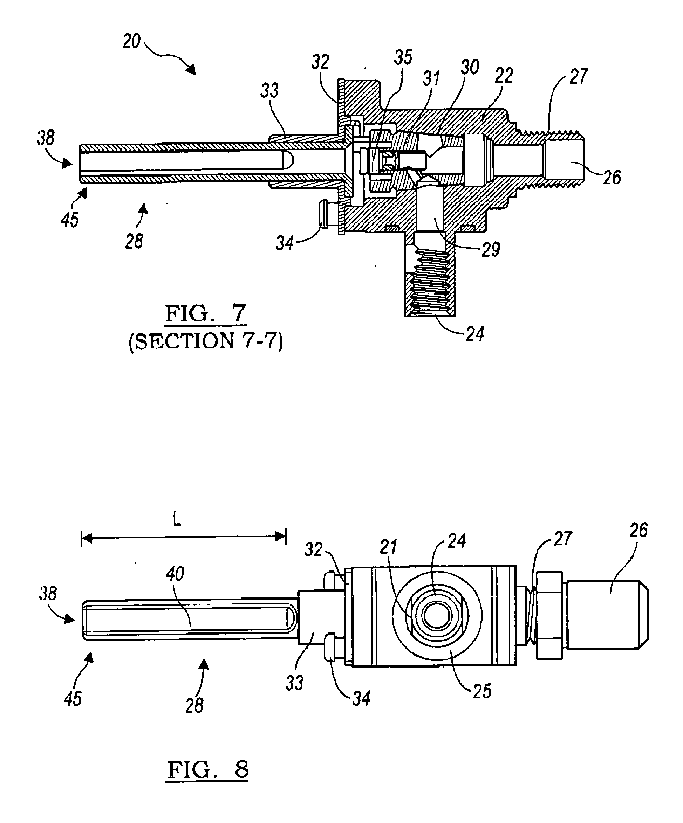

In certain embodiments, the present invention further provides control means for fine-tune adjustments to a rate of fluid flow for valve assemblies that are equipped with specific flow settings, such as high and low. In one preferred embodiment as shown in Figure 7, the control means includes an adjustment plug 35 member rotatably disposed in the valve member 31. Preferably, the adjustment feature of the plug 35 is accessible through the aperture 38 of the valve stem 28 by using an instrument such as a thin bladed screw driver. This feature allows for adjustment of the flow through at least one of the first and second ports 24, 26.

The description of the invention is merely exemplary in nature and, thus, variations that do not depart from the gist of the invention are intended to be within the scope of the invention. Such variations are not to be regarded as a departure from the spirit and scope of the invention.

## Claims

1. A valve, comprising:
a main valve body having a first port, a second port, and a fluid passage providing fluid communication between the first and second ports;
a valve member disposed within the main valve body and configured to selectively adjust fluid flow between the first and second ports; and
a thin-walled, hollow valve stem secured to the main valve body adjacent the valve member and configured for rotating the valve member, the valve stem having a flattened portion extending a length from proximal to the main valve body to an opposite distal end of the valve stem,
wherein the valve stem is operable to withstand at least 50 in-lbs of torque without exhibiting plastic deformation.

2. The valve according to claim 1, wherein the valve stem is operable to withstand at least 70 in-lbs of torque without exhibiting plastic deformation.

3. The valve according to claim 1, wherein the valve stem is heat treated.

4. The valve according to claim 3, wherein the valve stem is heat treated having a Rockwell C hardness of from about 40 to about 55.

5. The valve according to claim 1, wherein the valve stem has a wall thickness less than about 0.045 inches.

6. The valve according to claim 1, wherein the valve stem has a wall thickness from about 0.03 to about 0.045 inches.

7. The valve according to claim 1, further comprising an ignition switch assembly detachably secured to the valve assembiy.

8. The valve according to claim 1, further comprising a control knob detachably secured to the valve stem.

9. The valve according to claim 1, further comprising a cover plate securing the valve stem to the main valve body.

10. The valve according to claim 1, wherein the valve stem comprises zinc plated cold rolled steel.

11. The valve according to claim 1, wherein the valve stem comprises at least one projecting tab member configured to provide coordinated rotational movement with the valve member.

12. The valve according to claim 1, further comprising an adjustment plug member rotatably disposed in the main valve body and accessible through the hollow valve stem, the plug member providing means for fine-tune adjustment of a rate of fluid flow through at least one of the first and second ports.

13. The valve according to claim 1, wherein the valve stem comprises a first section having a flattened area and a second section having a cut-out area.

14. The valve according to claim 1, further comprising a tab locking mechanism requiring depression of the valve stem prior to any rotary movement.

15. The valve according to claim 1, wherein the valve stem has an outside diameter of about 0.25 inches or less.

16. A gas valve assembly, comprising:
a main valve body having a cavity, the main valve body including an inlet port and an outlet port disposed perpendicular to one another and in fluid communication, the inlet and outlet ports being continuous, integral extensions of the main valve body;
a valve member rotatably disposed within the cavity and configured to selectively adjust fluid flow between the first and second ports; and
a hollow valve stem secured to the main valve body adjacent the valve member and configured for coordinated rotating movement with the valve member, the valve stem having a wall thickness of from about 0.03 to about 0.045 inches and having a flattened portion providing an anti-rotation surface extending a length proximal to the main valve body to an opposite distal end of the valve stem.

17. The gas valve assembly according to claim 16, wherein the flattened portion partially extends along a length of the valve stem and is adjacent to a cut-out section, the cut-out section being operable to mate with a control knob.

18. The gas valve assembly according to claim 16, wherein the valve stem is heat treated having a Rockwell C hardness of from about 40 to about 55.

19. The gas valve assembly according to claim 16, wherein the valve stem is operable to withstand a torque of at least 50 in-lbs without exhibiting plastic deformation.

20. The gas valve assembly according to claim 19, wherein the valve stem is operable to withstand a torque of at least 70 in-lbs without exhibiting plastic deformation.

21. A gas valve assembly, comprising:
a main valve body having a cavity, the main valve body including an inlet port and an outlet port disposed perpendicular to one another and in fluid communication, the inlet and outlet ports being continuous, integral extensions of the main valve body;
a conical shaped valve member rotatably disposed within the cavity and configured to selectively adjust fluid flow between the first and second ports; and
a hollow valve stem secured to the main valve body adjacent the valve member and configured for coordinated rotating movement with the valve member, the valve stem having a wall thickness less than about 0.045 inches and a Rockwell C hardness of from about 40 to about 55, the hollow valve stem further comprising a flattened portion providing an anti-rotation surface and operable to withstand at least 50 lb-in of torque without exhibiting plastic deformation.

22. The gas valve assembly according to claim 21, further comprising an adjustment plug member rotatably disposed in the main valve body and accessible through the hollow valve stem, the plug member providing means for fine-tune adjustment of a rate of fluid flow.
